# EUROPEAN PATENT SPECIFICATION

(11) **EP 1 579 653 B1**
(45) Date of publication and mention of the grant of the patent: **11.01.2017**
(21) Application number: 03785444.5
(22) Date of filing: 24.12.2003
(51) Int. Cl.: H04L 29/06

(54) **CONTROL AND STATUS PROTOCOL BETWEEN A DATA DEVICE AND A WIRELESS COMMUNICATION UNIT**
KONTROLL- UND STATUSPROTOKOLL ZWISCHEN EINER DATENEINRICHTUNG UND EINER DRAHTLOSEN KOMMUNIKATIONSEINHEIT
PROTOCOLE DE COMMANDE ET D'ETAT

(30) Priority: 26.12.2002 US 330688
(43) Date of publication of application: 28.09.2005
(73) Proprietor: SIERRA WIRELESS, INC., Richmond, British Columbia V6V 3A4 (CA)
(72) Inventor: HOYT, Riley Steve, Richmond, British Columbia V6V 3A4 (CA)
(74) Representative: Ahner, Philippe
(86) International application number: PCT/CA2003/002037
(87) International publication number: WO 2004/059909

(56) References cited:
- EP-A- 0 789 468
- WO-A-02/13593
- BARKER P. ET AL: "PERFORMANCE MODELING OF THE IRDA PROTOCOL FOR INFRARED WIRELESS COMMUNICATIONS", IEEE COMMUNICATIONS MAGAZINE, vol. 36, no. 12, December 1998 (1998-12), pages 113-117, XP000800996, PISCATAWAY, US

## Description

### FIELD OF THE INVENTION

The present invention relates to wireless communication units, such as modems, for data devices. In particular, the present invention relates to communication protocols between a data device and a wireless communication unit.

### BACKGROUND OF THE INVENTION

Typically, a host unit controls the operation of a modem unit. The host unit will obtain status information from the modem unit and use this status information to determine the best way to control the modem unit. Received signal strength and similar information is provided by the modem unit to the host unit. Additionally, data to transmit is sent from the host unit to the modem unit and data received by the modem unit needs to be sent from the modem unit to the host unit.

The data sent between the modem unit and the host unit can be relatively large. In some circumstances, this blocks the ability of control and status information to be transferred between the host unit and the modem unit.

It is desired to have an improved protocol system for sending messages between a host unit and a modem unit.

Document WO 02/13593 A2 discloses a wireless radio frequency modem that plugs into a host computer and shares a central processing unit and a memory with the host computer, wherein principal modem functions are distributed between the modem and the host computer.

### SUMMARY OF THE INVENTION

The present invention uses a host interface protocol which allows for the multiplexing of data signals with control and status signals, debugging information and other commands. The host interface protocol preferably includes a length field, a message ID field indicating what type of message is enclosed, and an optional payload field.

Control and status protocols can be transferred within the optional payload field. A separate control and status protocol is used to transfer the control and status messages.

One embodiment of the present invention is a system including a host unit with a processor and wireless communication unit, such as a modem unit, including a transceiver and first-in-first-out-buffers (FIFO). Communication between the host unit and the wireless communication unit uses a host interface protocol. The host interface protocol defines a message header with a length field and a message ID field. The message ID field allows multiplexing between data stream transfers and status transfers for information sent to the host and wireless communication units. A control and status protocol is used for control and status message transfers between the host and the wireless communication unit, control and status messages being wrapped within the host interface protocol messages.

Further embodiments are disclosed in the appended claims.

### BRIEF DESCRIPTION OF THE DRAWING FIGURES

Fig. 1 is a diagram illustrating a host unit and a wireless communication unit for use with the system of the present invention.
Fig. 2 is a diagram that illustrates portions of the protocol stack for data transfers between the host unit and the wireless communication unit.
Fig. 3 is a diagram illustrating the interrelation of the control and status messages and post-interface protocol messages.
Fig. 4 is a diagram of prior-art data transmitted between host unit and wireless communication unit.
Figs. 5A and 5B are diagrams illustrating a host interface protocol that allows for multiplexing data for transmission as well as the control and status messages.
Fig. 6A is a diagram that illustrates host interface protocol messages.
Fig. 6B is a diagram that illustrates a header for host interface protocol messages.
Fig. 7 is a diagram that illustrates the transfer of control and status messages between the host unit and the wireless communication unit.
Fig. 8 is a diagram that illustrates the control and status message protocol for one embodiment of the present invention.
Fig. 9 is a diagram that illustrates control and status message transfers between the wireless communication unit and the host for one embodiment of the present invention.
Fig. 10 is a diagram that illustrates the transfer of control and status messages between the host and the wireless communication unit for one embodiment of the present invention.

### DETAILED DESCRIPTION

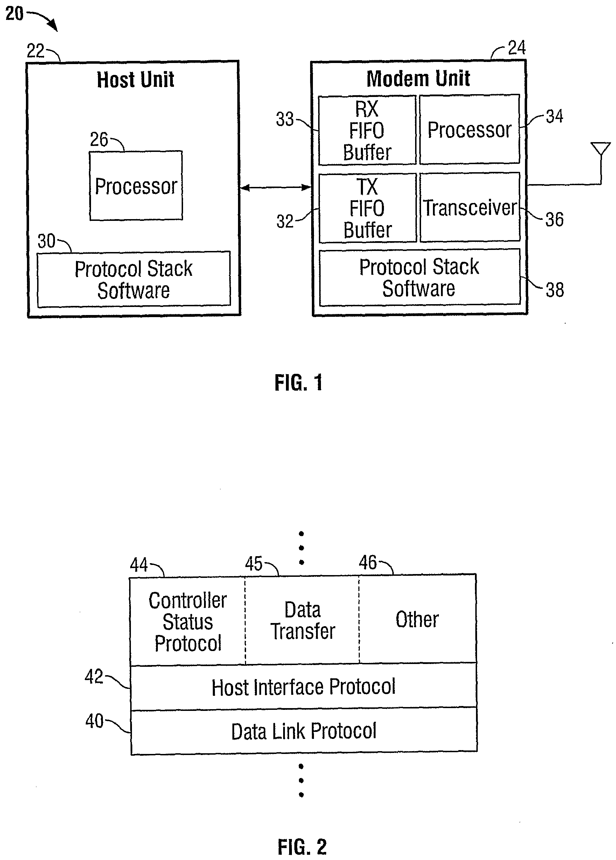

Fig. 1 is a diagram that illustrates the interconnection between a host unit 22 and a wireless communication unit 24 of one embodiment of the present invention. The host unit 22 can be a portable or a laptop computer, a personal digital assistant (PDA), or any other type of data device. The wireless communication in one embodiment is a modem. The wireless communication unit 24 is preferably a removable card modem unit, such as a PCMCIA card.

The host unit 22 preferably includes a processor 26, and a protocol stack software 30 which allows the processor 26 to implement the protocol stack of the system of the present invention. The wireless communication unit 24 includes a transmitter (TX) FIFO buffer 32 for storing data from the host unit 22, a receiver (RX) FIFO buffer 33 for storing data to send to the host unit 22, a processor 34, a transceiver 36 and protocol stack software 38 that allows it to implement the protocol stack of the system of the present invention. The system 20 including the host unit 22 and the wireless communication unit 24 can be used for transmitting data over a wireless network, and thus can allow the host unit 22 to send E-mail messages or connect to the Internet.

Fig. 2 is a diagram that illustrates a portion of the protocol stack for message transmission between the host unit 22 and the wireless communication unit 24 shown in Fig 1. A data-link protocol 40 concerns the data-link between the host unit and the wireless communication unit. The data-link protocol provides framing of datagrams. On top of the data-link protocol is the host interface protocol 42 which is described below. Running on top of the host interface protocol is the control and status protocol 44, also described below. Also running on the host interface protocol are any data transfer protocols 45 which allow for the transfer of data to be transmitted over the wireless communication unit or from the wireless communication unit to the host unit. Other protocols 46 can also be run on top of the host interface protocol 42. As will be discussed below, the ability of the host interface protocol to multiplex between data transfers and control and status information is quite useful.

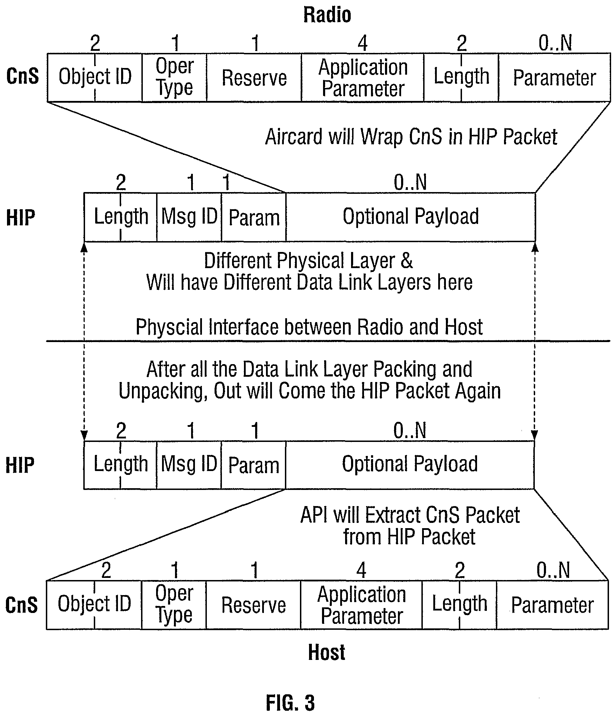

Fig. 3 is a diagram that illustrates the transfer of control and status messages within the host interface protocol message. At the wireless communication unit, a control and status message is constructed which is wrapped within a host interface protocol message. Depending upon the system layout, different data-link layers are used for the message transfer. At the host unit, the host interface protocol message is examined and, in a preferred embodiment, an application programming interface (API) running the protocol stack will extract the control and status packet from the host interface protocol packet.

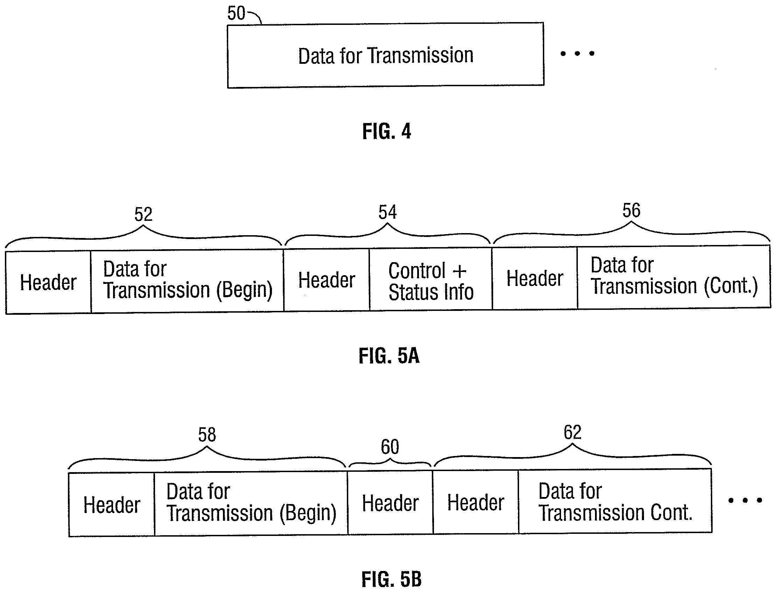

Figs. 4 and 5A-5B illustrate the advantage of having a host interface protocol to multiplex between data transfers and control and status transfers. Fig. 4 shows data 50 for transmission. Such data can be relatively long and prevent any control and status signals to be sent while the data is being transferred. Fig. 5A shows the use of the host interface protocol such that the data for transmission is broken up. Some of the host interface protocol messages include the data for transmission but others can include the control and status information in a control and status protocol message. This allows for control and status information to be multiplexed within larger data transmissions between the host unit and the wireless communication unit. The example shown in Fig. 5A illustrates a host interface protocol message 54 including the control and status protocol message interspersed between host interface protocol messages 52 and 56 which contain data for transmission.

The host interface protocol does not need to have a payload but can contain some signaling information within the header itself. This is shown in Fig. 5B, in which the payloadless header 60 is positioned between the host interface protocol message 58 and host interface protocol message 62 which contain data for transmission.

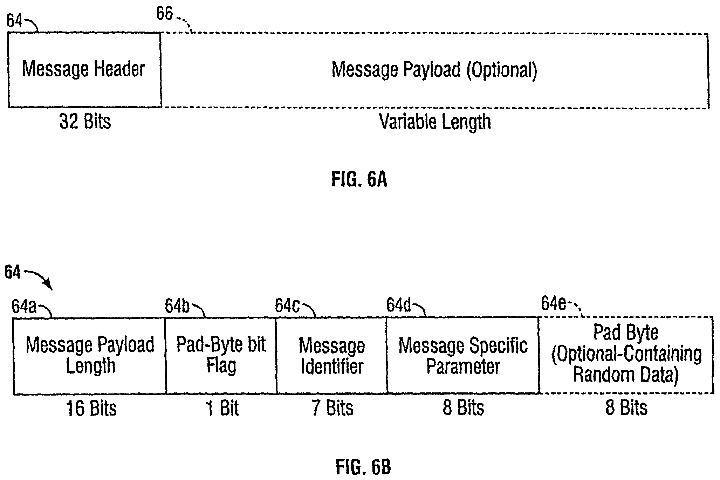

Fig. 6A illustrates a host interface protocol message with the message header 64 and optional message payload 66. Fig. 6B illustrates the message header with the message payload length 64a, pad-byte bit flag 64b message identifier 64c, message specific parameter 64d and optional pad-byte containing random data 64c. Note that the message identified 64c is quite useful because it allows for the multiplexing between data transfers and control and status transfers, as described above.

A variety of different messages can be exchanged between the host unit and the wireless communication unit. As will be described, the host interface protocol allows for the multiplexing between over-the-air data, wireless communication debugging and flash software downloads, and other types of messages. The message payload length field 64a helps identify the memory block buffer requirements to store the message. This length field is also useful to support alternative data length message transfer systems such as direct memory access. The length also helps indicate whether there is an odd or even number of bytes communicated in the message payload. In one embodiment, the maximum payload length for the host interface protocol is 2000 bytes. The pad-byte flag indicates whether any padding bytes are put in front of the message payload. If the pad-byte flag is set, then the message has padding bytes and the message payload length includes the length of the padding bytes and the message payload. The message identifier field indicates the message type.

The message specific parameter field indicates a word or line message header. The message type defines the use of this field.

In a preferred example, different message IDs are used in different directions to prevent the echoing of messages across the interface and to aid in software debugging. The message ID header is preferably kept as simple as possible to reduce the complexity of the system. Additionally, the host interface protocol preferably implements a grant request/response mechanism to seek permission prior to sending data, such that flow control can be accommodated over the interface. The host interface protocol also allows for the production of a signal to the host to indicate when the wireless communication unit resets. This simplifies the startup procedures on both sides of the interface. Additionally, the host interface protocol preferably implements a method of discarding stale messages that might be present in the FIFO buffers after a reset or a crash. The system also provides a mechanism to report error messages from the wireless communication device to the host. The host interface protocol also allows for interactive communication between the wireless communication unit and the host unit. Additionally, when the data-link layer uses an interface of high reliability (such as a PCMCIA interface), the host interface protocol can be simplified such that it reduces the processing burden on the microprocessor. The host interface protocol also preferably allows for feedback during the flash software upgrade.

In one embodiment there are three fundamental types of messages transferred between the host unit and the wireless communication unit indicated by the message ID field. These three fundamental types of messages are requests, responses, and indications.

A request message provides a means for the host to ask the wireless communication unit either to perform an operation or return a value. The wireless communication unit always responds to a request message with a response message. Because of the master/slave relationship between the host unit and the wireless communication unit, the wireless communication unit is not allowed to make requests of the host unit in a preferred embodiment. One and only one response message is sent in answer to each request message. Note that in order to provide full control to the wireless communication unit, a response to a specific request must be provided before a second request of the same type is issued. This effectively provides a stop-and-wait flow control on a per-request basis. If the host never receives a response within a time-out period, this is a failure case and thus the host unit can assume that the wireless communication unit has failed and should be recovered from a restart state.

Response messages are always sent from the wireless communication unit as a reply to the request from the host unit. The format and type of data of the response varies according to the type of response. Responses are not sent unsolicited. Thus, each response is paired with a specific request. In one embodiment, the request message IDs are in the range 00 to 31, and the response message IDs are in the range 64 to 95.

Indication messages provide a means to send unsolicited data from either side of the interface. Indications are used when no reply or return data is required from the receiver. No acknowledgment or reply is sent by the receiver of an indication in a preferred embodiment. The indications can include the over-the-air messages received from the wireless communication unit and sent to the host unit, as well as messages to be sent over the air from the host unit to the wireless communication unit and data passing back and forth between the flash memory. In one embodiment the indication messages ID from the host are in the range 32 to 63; indication message ID sent from the card are in the range 96 to 127.

In one example, the host interface protocol rules are such that if a message is received from either side of the interface containing undefined message ID, it will be discarded. If the maximum size of the message is exceeded, the receiver will discard the entire packet and ignore the message. In a preferred example, the pad-byte flag set will only be used for messages sent from the wireless communication unit to the host unit. The card will discard received reverse-channel data indication messages containing unexpected message sequencing numbers. The card application will ignore all boot loader specific messages. The boot loader will only receive the packets and the protocol if the host has placed the wireless communication unit into a firmware download mode. The boot indication packet can be sent from the host device during startup to provide the host driver with startup information, but it will not wait for or process host messages.

Appendix I included with this specification includes a list of message identifiers.

One example of the messaging supported by the host interface protocol is given below. The boot loader messages allow the loading of firmware onto a flash memory card in the wireless communication unit. The boot loader messages include download start requests, download response, download continuation requests, download continuation responses, download end requests, download end responses, flash program requests, flash program responses, launch fragment indication, and start application indication.

The wireless communication device startup messages include host data-link synchronization indication, data-link synchronization indication, boot information indication, restart indication.

The over-the-air messages include reverse channel grant messages, reverse channel data indications, forward channel data indications.

The control and status messages which can be indicated by a header without payload include system shutdown indications, configuration information requests, configuration information responses, packet session activation requests, packet session activation responses, link status indications, abort indications, wireless communication device control and status indications, host control and status indications, loopback requests, loopback responses, packet data protocol (PDP) context summary requests, PDP context summary responses, host environment indications.

Debugging messages which can be sent include wireless communication device command indications, host command indications, wireless communication device protocol stack indications, host protocol stack indications, wireless communication device AT command indications, host AT command indications, wireless communication device debug log indications, host debug log indications.

Details of the host interface protocol of one embodiment are described within Appendix I.

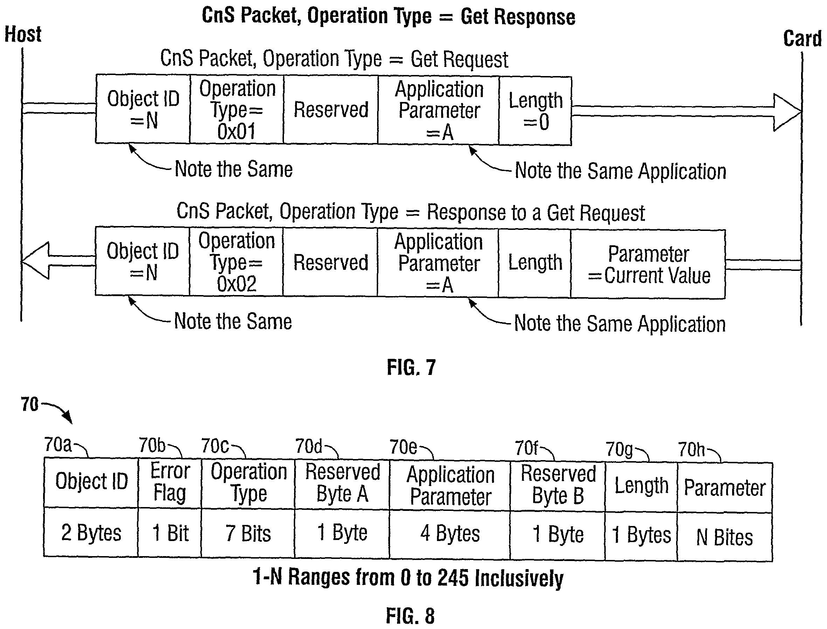

Fig. 7 illustrates the control and status packet for a get request and a response to a get request. Note that the application parameter is set the same, and the object ID is set the same.

Fig. 8 illustrates the control and status packets which are wrapped within the host interface protocol messages in a preferred embodiment of the present invention.

The control and status packet is preferably encapsulated within the host interface protocol. Starting with a control and status message, both the wireless communication unit and the host unit must encapsulate and de-encapsulate the control and status message and then perform any data-link layer framing that is necessary. Two types of data-link layer framing are anticipated, one for Universal Asynchronous Receive-Transmit (UART) communications and another for Network Drive Interface Specification (NDIS) communications. The control and status data communicated in the variable length binary packets all multibyte fields preferably use a network byte order. The control and status packets go into the payload section of the host interface protocol packets, and such are a subtype of the information available on that interface.

The fields of the control and status packet available are shown in Fig. 8 for one embodiment of the present invention. The control and status packet 70 includes an object ID field 70a, an error flag field 70b, an operation type field 70c, a reserved byte A field 70d, an application parameter field 70e, a reserved byte B field 70f, a length field 70g and a parameter field 70h. The object ID 70a indicates the type of the control and status message. The operation type field 70c indicates the type of operation, request, response notification, and so on. The reserved fields 70d and 70f are reserved for a specific type of use and are set to zero if not used. The application parameter field 70e indicates the ID of the sender task and is set to 0 if not used. The length field 70g preferably indicates the length of the parameter field 70h. In one embodiment, the maximum size of the control and status packet is fixed to 256 bytes including the header, so that the maximum parameter length is 246 bytes.

The types of control and status transactions available include polled command and response to allow the application to poll a wireless communication unit. The command sent to the wireless communication unit and the response returned to acknowledge the command. Depending upon the context of the command, the response may contain data such as status information or may simply be an acknowledgment. There are two types of operation for the poll commands; get requests, and response to get requests. Other types of transactions is write/action command and response. This type of transaction allows the application to write certain parameters or trigger an action within the wireless communication unit. If the transaction is used as a write command, the response will contain the newly-changed data. No parameters are included when the transaction is used in an action trigger. There are two types of operation types for this transaction. Set request, and response to set request.

Another type of control and status transactions are notifications. Notification information is unsolicited asynchronous status updates sent by the wireless communication unit. Upon power-up, notifications are always disabled. Notifications must be explicitly enabled the control and status mechanism. Different types of information can be sent. The criteria for unsolicited update depend upon the actual information being forwarded. Notifications include notification requests, response to notification requests, notification packets, notification stop requests and response to notification stop requests.

The host interface protocol and control and status frames can be sent over any link layer protocol. Examples of link layers include NDIS protocol framing and UART link layer protocol. The link layer over the FIFO considers the host interface protocol packet structure plus an optional payload at the end. This optional payload consists of either a point to point protocol (PPP) packet, and control and status packet, an AT command packet, a protocol stack message or debug message. Each of these packet types is identified by its unique message ID. The UART link layer protocol is a link layer over the UART consisting of marking the host interface protocol package with start and end flags and escaping the data within.

Appendix I illustrates the different control and status messages of one embodiment of the present invention in detail.

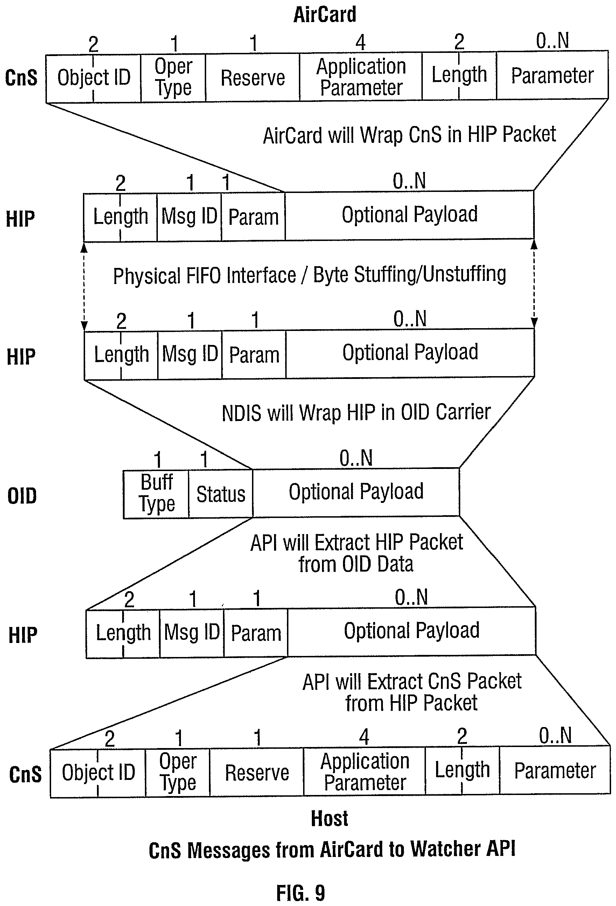

FIG. 9 illustrates the transfers between the wireless communication unit and the host unit for one embodiment of the present invention.

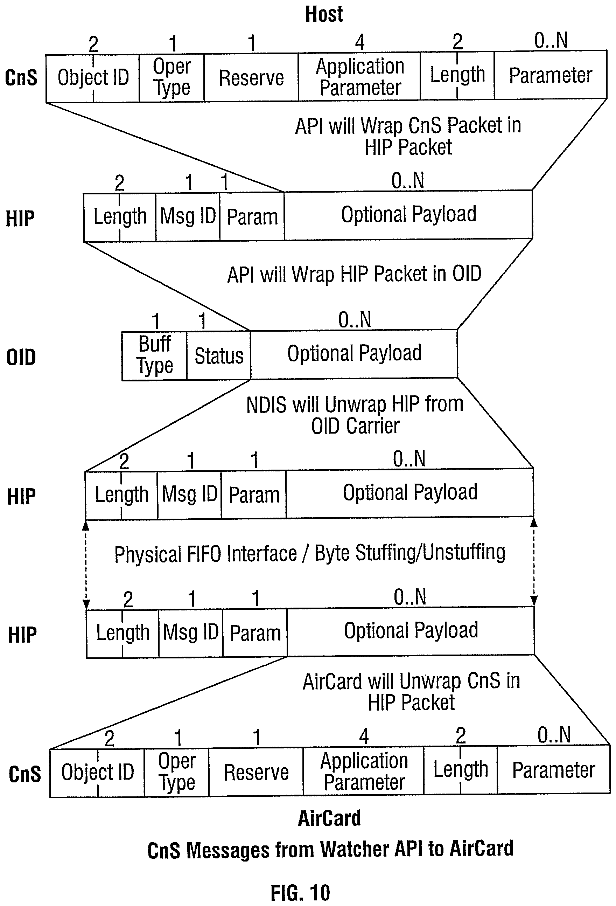

FIG. 10 illustrates the transfers between the host unit and the wireless communication unit for one embodiment of the present invention.

**Table of Contents**

| | | | | | | |
|---|---|---|---|---|---|---|
| 1 | General | | | | | 4 |
| | 1.1 | Purpose | | | | 4 |
| | 1.2 | Scope | | | | 4 |
| | 1.3 | Document Filing | | | | 4 |
| | | 1.3.1 | Location and Format | | | 4 |
| | | 1.3.2 | Revision Control Tools/Methods | | | 4 |
| | 1.4 | Revision History | | | | 4 |
| | 1.5 | Glossary | | | | 8 |
| | 1.6 | References | | | | 8 |
| 2 | Overview | | | | | 10 |
| | 2.1 | Design Goals and Requirements | | | | 11 |
| 3 | Message Primitives (Overview) | | | | | 12 |
| | 3.1. | Fundamental Types | | | | 12 |
| | | 3.1.1 | Requests | | | 12 |
| | | 3.1.2 | Responses | | | 12 |
| | | 3.1.3 | Indications | | | 12 |
| | 3.2 | Host Interface Rules | | | | 12 |
| | 3.3 | Summary of message identifiers | | | | 13 |
| 4 | Message Primitives (Details) | | | | | 17 |
| | 4.1 | Boot Loader Messages (including firmware download) | | | | 17 |
| | | 4.1.1 | Boot Loader-Boot & Hold Messages | | | 17 |
| | | 4.1.2 | Modem Startup Messages | | | 24 |
| | 4.2 | Over the Air Messages | | | | 24 |
| | | 4.2.1 | Reverse Channel Grant Indication | | | 26 |
| | | 4.2.2 | Reverse Channel Data Indication | | | 26 |
| | | 4.2.3 | Forward Channel Data Indication | | | 27 |
| | 4.3 | Control and Status Messages | | | | 27 |
| | | 4.3.1 | Save Non-volatile Data Indication | | | 27 |
| | | 4.3.2 | Configuration Information Indication | | | 28 |
| | | 4.3.3 | Context Activation Indication | | | 32 |
| | | A Link Status Indication message will always be sent in response to a Context Activation Indication message | | | | 32 |
| | | 4.3.4 | Link Status Indication | | | 33 |
| | | 4.3.5 | Abort Indication | | | 33 |
| | | 4.3.6 | Modem Control and Status Indication | | | 34 |
| | | 4.3.7 | Host Control and Status Indication | | | 34 |
| | | 4.3.8 | Loop Back Request | | | 35 |
| | | 4.3.9 | Loop Back Response | | | 35 |
| | | 4.3.10 | PDP Context Summary Request | | | 36 |
| | | 4.3.11 | PDP Context Summary Response | | | 37 |
| | | 4.3.12 | GPRS Attach Request | | | 37 |
| | | 4.3.13 | GPRS Attach Response | | | 37 |
| | | 4.3.14 | Profile Template Request | | | 37 |
| | | 4.3.15 | Profile Template Response | | | 37 |
| | | 4.3.16 | Host Environment Indication | | | 37 |
| | 4.4 | Clock Switch Messages | | | | 38 |
| | | 4.4.1 | Host Suspend Indication | | | 38 |
| | | 4.4.2 | Host Suspend Complete Indication | | | 38 |
| | | 4.4.3 | Host Resume Indication | | | 38 |
| | 4.5 | Debugging Messages | Host Resume Indication | | | 39 |
| | | 4.5.1 | Modem SWI Command Indication | | | 39 |
| | | 4.5.2 | Host SWI Command Indication | | | 39 |
| | | 4.5.3 | Modem Protocol Stack Indication | | | 39 |
| | | 4.5.4 | Host Protocol Stack Indication | | | 39 |
| | | 4.5.5 | Modem AT Command Indication | | | 40 |
| | | 4.5.6 | Host AT Command Indication | | | 40 |
| | | 4.5.7 | Modem (Rosette) Debug Log Indication | | | 40 |
| | | 4.5.8 | Host (Rosetta) Debug Log Indication | | | 41 |

### 1 General

### 1.1 Purpose

This document defines the protocol used to communicate between the host and the card for the Bandit (GPRS) project.

### 1.2 Scope

This document describes configuration and control information formatting and message sequencing. This document does not contain physical layer information (such as register and ISR information).

### 1.3 Document Filing

### 1.3.1 Location and Format

The electronic version of this document is stored in the Vault under document number 2110342.

For convenience, a copy of this document is also available at: \\TETLEY\PROJECTS\Bandit\dev\fw\docs\jdd\Host ip1p17.doc

This document has been created using MS Word 2000®.

### 1.3.2 Revision Control Tools/Methods

The revision control tool method consists of keeping a distinct electronic copy of the document per document version for managing changes to the document. All versions of the Host Interface Protocol are available at: \\TETLEY\PROJECTS\Bandit\dev\fw\does\idd\old Host ip\

### 1.4 Revision History

| Revision | Date | Author | Summary of change |
|---|---|---|---|
| 1.0 | June 30, 2000 | Victor Gonzalez | Initial Draft derived from Bullet (Metricom) documents "Host to Microprocessor Message Identifier Types for the Bullet Project" and ProjMem001. |
| 1.1 | July 19, 2000 | Victor Gonzalez | Updated Flow Control message primitives, Fragment Launch Indication primitive, Restart Indication primitive, and added crash dump message primitive. |
| 1.2 | July 24, 2000 | Victor Gonzalez | Added in control messages to suspend host during clock changes on the FIFO. Modified Command Request/Response message payload to specify SME vs. SWI vs. PCI command request/responses. Specified the value in the length field excludes the size of the length field itself. |
| 1.3 | August 2, 2000 | Victor Gonzalez | Separated Command/Response messages into distinct SWI, SME, and Layer 1 Command/Response messages. Added serial numbers to Reverse Channel Data Indication messages. Added version ID & date to boot information message (was binary crash indication message). |
| 1.4 | August 29, 2000 | Rachel Bedet | Modified Flow Control section and Reverse Channel Grant indication to use message sequence numbers rather than blocks of data. Added new "used for" column to the message identifiers summary table. Added description and diagram of Host Suspend/Resume message indications. Updated description for Boot information indication. Added new user parameter field to the message header. |
| 1.5 | September 7, 2000 | Rachel Bedet | Reorder section Overview sections. Reorder Message ids Modified MSN granting scheme Added new to indicate message padding (single bit from message id) |
| 1.6 | September 15, 2000 | Rachel Bedet | Redefined length field to be the message payload length field. Clarified launch fragment indication usage. Reordered document to define message header in one-section and message payload in another. Added host interface protocol rules section. Changed maximum grant limit to be 127. Changed L1_REQ/L1_RESP, SME_REQ/SME_RESP and SWI_REQ/SWI_RESP to be indications. |
| 1.7 | September 20, 2000 | Rachel Bedet | Corrected summary table, Added Application version string to Boot Information Indication payload Created new Abort Indication Created new Save non-volatile data indication Created new Start application indication Clarified Launch Fragment indication. |
| 1.8 | September 27, 2000 | Rachel Bedet | Rename HSME_IND/MSME_HMD to HSAS_IND/MSAS_IND Added new Loop Back Request/Response Changed all message payload strings to be NULL terminated ASCII strings. Clarified the usage of the pad byte flag on the card side. Reversed launch 0x00 for a "normal" launch image. Modified MSN behind and ahead definitions. |
| 1.9 | November 21, 2000 | Rachel Bedet | Define SAS stream numbers Added new Configuration Information and Context Activation Indications Updated Reverse Channel Grant Indication 1-byte return code values. |
| 1.10 | November 27, 2000 | Rachel Bedet | Moved the message specific field to payload for all status and control message (except for loop back request/response) Added MAC address and IMEI version to Boot Information Indication Updated payload contents for Link Status Indication |
| 1.11 | February 6, 2001 | Victor Gonzalez | Defined the "cause" values in the Link Status Indication message. |
| 1.12 | February 20, 2001 | Rachel Bedet | Added the new "Watcher specific" column to the message summary table. Create the Modem Control and Status Indication and the Host Control and Status Indication. |
| 1.13 | February 28, 2001 | Rachel Bedet | Create new Flash Program Request/Response packets Modified the Boot Loader - Boot & Hold Messages section of the document to explain new packet use. |
| 1.14 | March 15, 2001 | Rachel Bedet | Updated copyright year. Clarified contents of the pad byte. Fixed grammatical errors. |
| 1.15 | April 27, 2001 | Victor Gonzalez | Updated HIP CNS messages |
| 1.16 | May 7,2001 | Victor Gonzalez | Updated HIP CNS messages; added AT command messages, debug indications, and rename SAS messages to make them more generic |
| 1.17 | June 14, 2001 | Victor Gonzalez Riley Hoyt | Updated LSI, CIL, CAI messages; added PDP Context summary req./resp. messages; added Profile Template req./resp. messages; added Attach req./resp. messages; replace EDGE references with GPRS references throughout; renumbered messages to match Posetta implementation (MSWI_IND/HSWI_IND swapped with MAT_IND/HAT_IND respectively) and added (Rosetta) Debug Log messages MRD_IND/HRD_IND; Added RTCONF_IND message; Change firmware download continuation from an indication to request response in order to provide flow control; Stated that request/response pair are stop and wait; |

### 1.5 Glossary

| Term | Description |
|---|---|
| | Personal Computer Memory Card International Association, term used to describe the electrical and physical interface between the host PC and the modem. |
| FIFO | First In First Out memory device that is used to interface between two processors. The device uses sequential access as opposed to random access. |

### 1.6 References

| Ref | Doc | Document title |
|---|---|---|
| R-1 | 2110330, Rev. 1.2 | GPRS Contract Book |
| R-2 | TBD | Bandit Boot Loader Design |
| R-3 | SWI GPRS Project Memo 003 | GPRS Aircard 710 Baseband Hardware Architecture |
| R-4 | SWI GPRS Project Memo 007 | GPRS AirCard 710 Programmer's guide |
| R-5 | TBD | Bandit Host Interface Design |
| R-6 | TBD | CWE Control and Status Protocol |

### 2 Overview

The Bandit GPRS project deliverable consists of a Type II PC Card, GPRS packet switched data modem. The interface between the host PC and the card is via PCMCIA. Low-level specifications for this interface, including a description of data framing, is described in the AirCard 710 Hardware Architecture [R-3]. The purpose of this document is to describe the format of the data in the messages as well as the message primitives sent across the interface.

A variety of different messages are exchanged between the host PC and the modem. Examples of these messages are: "over-the-air" data, modem debugging and flash software downloads. This document specifies the message-based protocol between the modem and the host.

The messages consist of a message header followed by an optional variable length message payload. The contents of the message payload are specific to each message type.

| Message Header | Message Payload (optional) |
|---|---|
| 32 bits | Variable length |

The message header is comprised of a payload length field, pad-byte bit flag, message identifier and a message specific parameter.

| Message Payload Length | Pad-Byte bit flag | Message Identifier | Message Specific Parameter | Pad Byte (optional - containing random data) |
|---|---|---|---|---|
| 16 bits | 1 bit | 7 bits | 8 bits | 8 bits |

The message payload length field is useful for various purposes. It helps identify the memory block buffer requirements to store the message. This length field is also useful to support alternative data link message transfer mechanisms such as DMA. Finally, length is also useful to indicate whether there is an even or odd number of bytes communicated in the message payload (note that the underlying data-link is fixed 16-bit wide). The minimum and maximum values of the message payload length field are 0 and 2000 respectively.

The pad byte flag field indicates if there is a pad byte is in front of the message payload If the pad byte flag is set then the message has a pad byte and the message payload length includes the length of the pad byte and the message payload.

The message identifier field identifies the message type.

The message specific parameter field provides a word aligned message header. The message type defines the use of this field. For example, the "Reverse Channel Grant Indication" uses the message specific parameter as a message sequence number whereas the "Download Start Response" uses it as a return code.

### 2.1 Design Goals and Requirements

The design of this protocol needs to meet the following requirements and goals:
- Different message ids used in different directions to prevent echoing of messages across the interface and to aid in software debugging.
- Simple message id header to reduce complexity of data link state machine.
- Provide a grant request/response mechanism to seek permission prior to sending data such that flow control is accommodated over the interface
- Provide a signal to the host to indicate if the modem has reset. This simplifies startup procedures on both sides of the interface.
- Provide a method of discarding stale messages that might be present in the FIFO after a reset or crash.
- Provide simple and extensible mechanism to report error messages from the modem to the host.
- Provide simple and extensible interactive communication mechanism between the modem to the host. This mechanism should allow for a command-line type of interface.
- Rely on the high reliability PCMCIA interface to reduce the processing burden on the microprocessor.
- Provide feedback during various phases of the flash software upgrade process.

### 3 Message Primitives (Overview)

### 3.1 Fundamental Types

There are 3 fundamental types of messages that flow between the PC host and the modem microprocessor: requests, responses and indications.

### 3.1.1 Requests

A request message provides a means for the host (master) to ask the card (slave) to either perform an operation or return a value. The slave always responds to a request message with a response message. Because of the master/slave relationship, the card is not allowed to make requests of the host. One and only one response is sent for every request. Note that in order to provide flow control to the modem, a response to a specific request must be received before a second request of the same type can be issued. This effectively provides stop and wait flow control on a per request basis. If the host never receives a response to a request (timeout) this is a failure case and thus can assume that the modem device has failed and should be recovered from a restart state.

Request message ids are in the range of 00 to 31.

### 3.1.2 Responses

A response message is always sent from the card to reply to a request from the host. The format and type of data in the response varies according to the type of response.

Responses can never be sent unsolicited (i.e. every response is paired with a specific request).

Response message ids are in the range of 64 to 95.

### 3.1.3 Indications

Indication messages provide a means to send unsolicited data from either side of the interface. Indications are used when no reply or return data is required from the receiver. No acknowledgement or reply is ever sent by the receiver of an indication.

Indication message ids sent from the host PC are in the range 32 to 63.

Indication message ids sent from the card are in the range of 96 to 127.

### 3.2 Host interface Rules

1. If a message is received by either side of the interface containing undefined message id it will simply be discarded.
2. If the maximum length of a message is ever exceeded, the receiver will discard the entire packet and ignore the message.
3. All multi-byte fields used in this protocol will be in network byte order. That is the most significant byte is sent first followed by lesser significant bytes. The least significant byte of a multi-byte field is sent last. Note that this differs from the way Intel processors would store multi-byte fields and special methods must be used to write multi-byte fields.
4. The host will never send a message to the card with the pad byte flag set. The modem will ignore the pad byte flag.
5. The card will discard any received "Reverse Channel Data Indication" messages that contain unexpected message sequence numbers.
6. The card application will ignore all boot loader specific messages.
7. The boot loader will only receive packets on this protocol if the host has placed the modem into firmware download mode. Note that the "boot indication" packet can be sent from the device during start to provide the host driver with startup information but it will never wait for or process host messages.

### 3.3 Summary of message Identifiers

| **Message ID** | **Direction** | **Message type** | **Message Specific Parameter** | **Name** | **Description** | **Used in** | **Watcher Specific** |
|---|---|---|---|---|---|---|---|
| 00 (0x00) | Host -> Modem | Request | Unused | DS_REQ | Qownload start request | Boot Loader only | X |
| 01 (0x01) | Host -> Modem | Request | Unused | DE_REQ | Download end request | Boot Loader only | X |
| 02 (0x02) | Host **-**> Modern | Request | Unused | DCONT_REQ | Download continuation request | Boot Loader only | X |
| 03 (0x03) | Host -> Modern | Request | Unused | LOOP_REQ | Loop back request | Application | X |
| 04 (0x04) | Host -> Modern | Request | Unused | PROG_REQ | Flash program request | Boot Loader only | X |
| 05 (0x05) | Host -> Modem | Request | Unused | PSUM_REQ | PDP Context Summary request | Application | |
| 06 (0x06) | Host -> Modern | Request | Unused | ATT_REQ | GPRS Attach request | Application | |
| 07 (0x07) | Host -> Modem | Request | Unused | PT_REQ | Profile Template request | Application | |
| 08 (0x08) | Host-> Modern | Request | Unused | CONF_REQ | Configuration Information Request | Application | |
| 09 (0x09) | Host -> Modern | Request | Packet session ID (optional) | PSACT_REQ | Packet Session Activation Indication | Application | |
| 10 (0x0A) 31 (0x1F) | Host -> Modem | Request | - | - | Undefined (not implemented) | | |
| | | | | | | | |
| | | | | | | | |
| 32 (0x20) | Host -> Modern | Indication | Unused | MSYNC_IND | Modern data link sync indication | Boot Loader and Application | |
| 33 (Ox21) | Host -> Modern | Indication | Launch Code | MLAUN_IND | Launch fragment indication | Boat Loader only | |
| 34 (0x22) | Host -> Modern | Indication | - | - | Not implemented | - | |
| 35 (0x23) | Host -> Modern | Indication | Message Sequence Number | RDATA_IND | Reverse channel data indication | Application | |
| 36 (0x24) | Host -> Modern | Indication | Unused | MSWI_IND | Modern SWI command indication, command line debugger | SW1 Debugging | X |
| 37 (0x25) | Host -> Modern | Indication | Unused | - | Undefined (not implemented) | - | |
| 38 (0x26) | Host -> Modern | Indication | Unused | SAVE_IND | Save non-volatile data | Application | X |
| 39 (0x27) | Host -> Modern | Indication | Unused | SUSC_IND | Host Suspend Complete indication | Application Clock Switch | |
| 40 (0x28) | Host -> Modern | Indication | Launch Code | STRT_IND | Start Application Indication | Boot Loader Only | |
| 41 (0x29) | Host -> Modern | Indication | Unused | - | - | - | |
| 42 (0x2A) | Host -> Modern | Indication | Unused | ACT_IND | Context Activation Indication | Application | |
| 43 (0x2B) | Host -> Modern | Indication | Unused | MCNS_IND | Modern Control and Status Indication | Application | X |
| 44 (0x2C) | Host → Modern | Indication | Unused | MAT_IND | Modern AT Command indication | SWI Debugging | X |
| 45 (0x2D) | Host -> Modern | Indication | Depends on protocol stack in use | MSTACK_IND | Modern Protocol Stack debug indication | Protocol Steck Debugging (example: CAIT) | X |
| 46 (0x2E) | Host → Modern | Indication | Unused | MRD_IND | Modern (Rosetta) Debug Log indication | SWI Debugging | X |
| 47 (0x2F) | Host -> Modern | Indication | Unused | RTCONF_IND | Run-time configuration Indication | Application | |
| 48 (0x30) 63 (0x3F) | Host -> Modern | Indication | - | - | Undefined (not implemented)p1c!ntcntc<!) | - | |
| 64 (0x40) | Modern -> Host | Response | Return Code | DS_RESP | Download start response | Boot Loader only | X |
| 65 (0x41) | Modern Host | Response | Return Code | DE_RESP | Download end response | Boot Loader only | X |
| 66 (0x42) | Modern -> Host | Response | Unused | DCONT_RESP | Download continuation response | Boot Loader only | X |
| - 67 (0x43) | Modern Host | Response | Unused | LOOP_RESP | Loop Back response | Application | X |
| 68 (0x44) | Modern -> Host | Response | Unused | PROG_RESP | Flash Program response | Boot Loader only | X |
| 69 (0x45) | Modern -> Host | Response | Unused | PSUM_RESP | PDP Context Summary response | Application | |
| 70 (0x46) | Modern -> Host | Response | Unused | ATT_RESP | GPRS Attach response | Application | |
| 71 (0x47) | Modern -> Host | Response | Unused | PT_RESP | Profile Template response | Application | |
| 72 (0x48) | Modern -> Host | Response | Error code | CONF_RESP | Configuration Information Response | Application | |
| 73 (0x49) | Modern -> Host | Response | Error code | PSACT_RESP | Packet Session Activate Response | Application | |
| 74 (0x4A) 95 (0x5F) | Modern Host | Response | - | - | Undefined (not Implemented) | - | |
| 96 (0x60) | Modern -> Host | Indication | Unused | HSYNC_IND | Host data link sync indication | Boot Loader and Application | |
| 97 (0x61) | Modern -> Host | Indication | Unused | BOOT_IND | Boot Information Indication | Boot Loadeer only | |
| 98 (0x62) | Modern -> Host | Indication | Return Code | RSTART_IND | Restart indication | Boot Loader and Application Startup | |
| 99 (0x63) | Modern -> Host | Indication | Unused | FDATA_IND | Forward channel data indication | Application | |
| 100 (0x64) | Modern -> Host | Indication | Message Sequence Number | RG_IND | Reverse Channel Grant Indication | Application Flow Control | |
| 101 (0x65) | Modern -> Host | Indication | Unused | HSWI_IND | Host SWl command indication, ui command line debugger | SWl Debugging | X |
| 102 (0x66) | Modern -> Host | Indication | - | - | Undefined (not implemented) | - | |
| 103 (0x67) | Modern -> Host | Indication | Unused | SUS_IND | Host Suspend indication | Application Clock Switch | |
| 104 (0x68) | Modern -> Host | Indication | Unused | RES_IND | Host Resume indication | Application Clock Switch | |
| 105 (0x69) | Modern -> Host | Indication | Unused | LINK_IND | Link Status indication | Application | |
| 106 (0x6A) | Modern -> Host | Indication | Unused | AB_IND | Abort indication | Application | X |
| 107 (0X6B) | Modern -> Host | Indication | Unused | HCNS_IND | Host Control and Status Indication | Application | X |
| 108 (0x6C) | Modern -> Host | Indication | Unused | HAT_IND | Host AT Commamd indication | SWI Debugging | X |
| 109 (0x6D) | Modern -> Host | indication | Ubused | HSWI_IND | Host SWI command indication | SWI Debugging | X |
| 109 (0x6D) | Modern -> Host | Indication | Optional use to multiplex various protocol stock debugging streams | HSTACK_IND | Host Protocol Stack indication | Protocol stuck Debugging (example: CAIT) | X |
| 110 (0x6E) | Modern -> Host | Indication | Unused | HRD_IND | Host (Rosetts) Debug Log indication | SWI Debugging | X |
| 111 (0x6F) 127 (0x7F) | Modern -> Host | Indication | - | - | Undefined (not implemented) | - | |

### 4 Message Primitives (Details)

### 4.1 Boot Loader Messages (Including firmware download)

### 4.1.1 Boot Loader - Boot & Hold Messages

The boot loader can only read HIP protocol messages when the modem device has entered firmware download mode (in PCMCIA card configurations this is achieved when the EPGA/ASIC "Boot & Hold" bit is set. The messages described in this section are only implemented in the boot loader image.

The modem device executes firmware that resides on Flash memory on the card. To support the ability to upgrade the contents of the flash memory in the field, the ability to download new firmware images into the card (from the host PC to the card) is provided. The following message sequence diagram depicts the message flow between the host and the modem during a firmware download session.

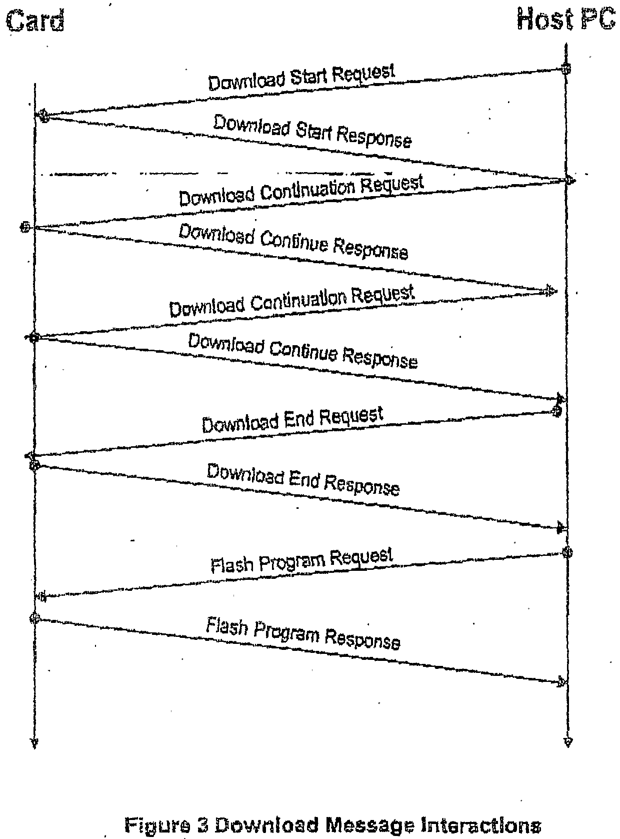

The download start request is used to signal the modem to initialize for a program download procedure. A Download start response is always sent in response to this message. After the download start request, the remainder of the program is downloaded using multiple download continuation requests and responses. The download end request is used to signal the card that the program download process is complete. The card concludes with a download end response. The host will send a flash program request at this time. The card will complete copying the downloaded program to flash and send a flash program response back to the host. The host will then either send a launch fragment indication to start the application program on the card or reset the card.

Note: In some modem products the flash will require programming during the download process (there is not enough RAM to buffer the entire image before programming).

A running checksum is applied to the entire software download process beginning with the download start request and finishing with the download end request. The 16-bit checksum variable is initialized to 0 at the download start request. The host then "walks" through and sums each byte (one byte at a time) of the message payload of all download packets (start, continue and end) into a 16-bit accumulator. The resultant 16-bit checksum is then sent as the payload of the download end request.

The modem performs a similar procedure and initializes a 16-bit checksum variable to 0 upon the reception of the download start request and sums all download message payload bytes one byte at a time. The modem then verifies the calculated checksum against the checksum received in the "download end request". The modem will respond with a "download end response".

### 4.1.1.1 Download Start Request

The download start request is used to signal the modern to initialize for a program download procedure. This request causes the modem to initialize any required resources as well as provide an acknowledgement that the file format and file type is correct.

| |
|---|
| Message Id: 0x00 |
| Message Specific Parameter: unused |
| Message payload consists of the image header optionally followed by as much of the image data will fit in the remaining packet (given the maximum message size) |

### 4.1.1.2 Download Start Response

The download start response is sent to reply to the host's download start request. This response is only implemented in the boot loader image (application software will discard any and all download requests).

| |
|---|
| Message Id: 0x40 |
| Message Specific Parameter: return code |
| • 0x00 - Success, continue download process |
| • 0x01 - Error, download process aborted. |
| Message payload is optional. If present the payload will consist of a NULL terminated ASCII error string describing the error reason. Examples of some possible error reasons might be: "invalid product ID" or "invalid load address" |

### 4.1.1.3 Download Continuation Request

The download continuation request is used to download the software flash image to the card. After a download start request, the remainder of the image download is carried out using this request. After receiving this request, the card will send a download continue response thus providing end to end flow control for firmware downloads.

| |
|---|
| Message Id: 0x02 |
| Message Specific Parameter: unused |
| Message payload carries the next "chunk" of the downloaded image. |

### 4.1.1,4 Download Continuation Response

The download continuation response is used to acknowledge that the transfer of each download chunk (see download continuation request).

| |
|---|
| Message Id: 0x42 |
| Message Specific Parameter: error code |
| 00 - success |
| 01 - failure |
| There is no message payload associated with this message. |

### 4.1.1.5 Download End Request

The download end request is used to signal the card that the program download process is complete. After receiving this request, the card will validate the downloaded program (incl. verifying the checksum) and send a download end response indicating if the download was successful.

| |
|---|
| Message Id: 0x01 |
| Message Specific Parameter: Unused |
| Message payload is a 16-bit field containing the checksum for the entire download process |

### 4.1.1.6 Download End Response

The download end response is sent to reply to the host's download end request. This response is only implemented in the boot loader image.

After sending this response, the card will expect a Flash Program Request from the host

| |
|---|
| Message Id: 0x41 |
| Message Specific Parameter: return code |
| • 0x00 - Success, complete program downloaded |
| • 0x01 - Error, download process aborted. |
| The message payload is optional. If present it will consist of a NULL terminated ASCII error string describing the error reason. |

### Flash Program Request

The flash program request is used to signal the card to copy the download image into flash. After receiving this request, the card will program the flash and send a flash program response indicating if the flash programming was successful.

| |
|---|
| Message Id: 0x04 |
| Message Specific Parameter: unused |
| The message payload is unused. |

### 4.1.1.7 Flash Program Response

The flash program response is sent to reply to the host's flash program request. This response is only implemented in the boot loader image.

After sending the response the card will not restart itself, it will simply wait either to receive a launch fragment indication or to be reset from the host.

| |
|---|
| Message Id: 0x44 |
| Message Specific Parameter: return code |
| • 0x00 - Success, complete program copied to flash |
| • 0x01 - Error, flash programming failed |
| The message payload is optional. If present it will consist of a NULL terminated ASCII error string describing the error reason. |

Note that in some modern designs the flash is actually programmed during the data transfer process instead of at the end of the process. In any case the "Program Request/Response" will be sent from the host application and the modern device must implement these messages. In doing so the host firmware download application can be consistent regardless of the actual method used on the modem device.

### 4.1.1.8 Launch Fragment Indication

Prior to receiving a Launch Fragment Indication from the host, the card should have received a Download Start Request, multiple Download Continuation Requests, a Download End Request and a Flash Program Request, completing a successful firmware download. If the download was not completed or successful then the boot loader will discard any Launch Fragment Indications it receives. Given that an image was successfully downloaded, the card will launch the image (regardless of where image resides: RAM or Flash) with the provided launch code when a Launch Fragment Indication is received.

| |
|---|
| Message Id: 0x21 |
| Message Specific Parameter: launch code |
| • 0x00 - reserved to indicate the normal launch of the firmware image. |
| There is no message payload associated with this message. |

### 4.1.1.9 start Application Indication

The Start Application Indication is sent from the host to the card to start the standard application with the specific launch code as an input parameter. This message will be ignored if there is no application or if the application is bad.

| |
|---|
| Message Id: 0x28. |
| Message Specific Parameter: launch code |
| • 0x00 - reserved to indicate the normal launch of the firmware application image. |
| There is no message payload associated with this message. |

### 4.1.2 Modem Startup Messages

### 4.1.2.1 Host Data Link Synchronization Indication

The host data link synchronization indication (sent by modem to the host) is used to provide a simple unacknowledged method of start-up sequencing. This indication serves 2 purposes: data link synchronization and a means to discard stale messages that might be present in the FIFO after a restart. This dual purpose implies that this message must be sent twice at start-up: once to establish link framing and once to force the link layer into the normal message processing state. There is no message payload in this indication.

| |
|---|
| Message Id: 0x60 |
| Message Specific Parameter: unused |
| There is no message payload associated with this message. |

After the boot loader image sends two data link sync messages it then sends, the Boot Information Indication which may be followed by the Restart Indication message to inform the host of the operational state of the modem.

After the application image sends two data link sync messages it sends a Restart Indication message to indicate to the host that the application is running.

Note: The NDIS driver must always send a "Modem Data Link Sync" message when it receives this message thus ensuring that the modem device will always receive it's data. link sync message.

### 4.1.2.2 Modem Data Link Synchronization Indication

The modem data link synchronization indication is used to provide a simple unacknowledged method of start-up sequencing. The modem data link synchronization procedure operates exactly the same as the host data link sync procedure defined in section 4.1.2.1.

The host will always send a modem data link sync indication to the card when it receives a host data link sync indication from the card.

| |
|---|
| Message Id: 0x20 |
| Message Specific Parameter: unused |
| There is no message payload associated with this message. |

### 4.1.2.3 Boot Information Indication

The "Boot Information Indication" message is sent from the card to the host PC during the boot procedures. Crash information is diagnostic information that is saved during card failure. For more information regarding the usage of the "Boot Information Indication" in the boot load procedure, refer to the Bandit Boot Loader Design document (reference [R-2).

| | | | | |
|---|---|---|---|---|
| Message Id: 0x61 | | | | |
| Message Specific Parameter: unused | | | | |
| The Message payload is as follows: | | | | |
| | MAC Address | Card specific MAC address | 6 bytes | |
| | IMEI version | Card specific IMEI version | 16 bytes | |
| | Boot loader version | Null terminated ASCII string | 80 bytes | |
| | Application version | Null terminated ASCII string | 84 bytes | |
| | Crash dump | Null terminated ASCII crash dump string | Variable length | |
| | | | | |

### 4.1.2.4 Restart Indication

Whenever the card resets it sends the restart indication message. This message provides information on the restart status of the card software. Note that this message can be sent by the boot loader (if application is deemed corrupt or not present) but in the general case this message is sent by the card firmware application. This message is used by the host to detect that the wireless application has started and has entered the normal operational message processing state.

| |
|---|
| Message Id: 0x62 |
| Message Specific Parameter: Return Code |
| • 0x00 - Card application firmware running (sent by application firmware). Information string contains software version card application |
| • 0x01 - Failed to start application, no application detected (sent by boot loader). |
| • 0x02 - Failed to start application, corrupted application detected (sent by boot loader). |
| • 0x03 - Waiting in Boot & Hold state for program download (sent by boot loader when detecting Boot & Hold condition). |
| • 0x04 - RAM test failed. |
| Message payload is an optional. If present will consist of a NULL terminated ASCII string whose purpose is to provide additional information (example: aid in debugging). |

### 4.2 Over the Air Messages

Data that is sent from the host PC to the card for the purpose of sending data "over the air" back into the network is termed "reverse channel data)". It is important to provide flow control in the reverse channel direction from the host PC to the card. In the opposite direction, the card does not have the capability-to flow-control data received from the network hence there is no flow control support in the forward channel direction.

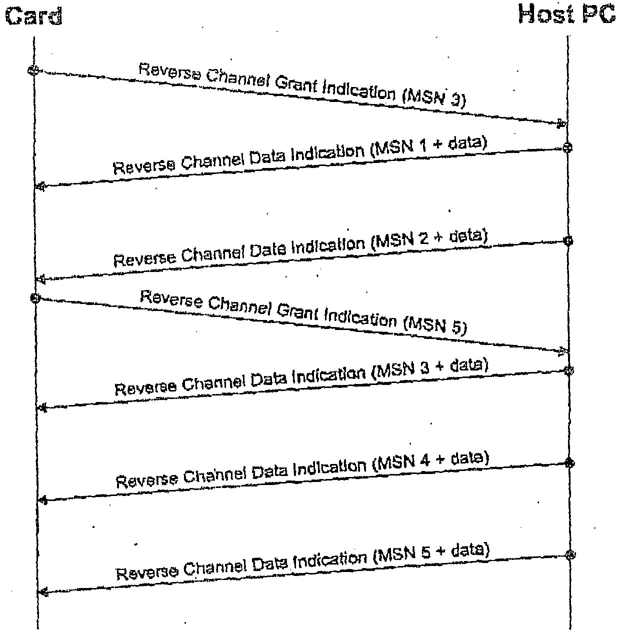

The "Reverse Channel Grant Indication" message primitive sends an 8-bit message sequence number (MSN) from the card to the host. The indication informs the host of the MSN of the last reverse channel data message the host is permitted to send to the card. The host will continue to send "Reverse Channel Data Indications" until the message containing the MSN specified in the most recent "Reverse Channel Grant Indication" has been sent to the card or until a "Reverse Channel Grant Indication" is received that revokes permission to send further messages.

The "Reverse Channel Grant Indication" message is unsolicited. The host PC must be prepared at any time to receive another " Reverse Channel Grant Indication" message specifying a different MSN. The host can continue to send messages to the card until the MSN of the next message to be sent is ahead of the granted MSN. Any MSN between (granted MSN + 1) modulus 256 and (granted MSN + 128) modulus 256 inclusively is considered to be ahead the granted MSN. Any MSN between (granted MSN - 127) modulus 256 and (granted MSN) inclusively is considered to be behind the grant.

The card is limited to granting 127 messages at a time.

Upon receiving a restart indication, the host PC will initialize its last sent MSN to 0. Likewise on the card the last received MSN will be initialized to 0. Lets examine a possible use case. After initialization the card sends a "Reverse Channel Grant Indication" containing the MSN 120. Upon receiving this grant indication the host is free to send out 120 messages incrementing its last sent variable each time a message is sent. The card will update its last received MSN value with the sequence number found in the message specific parameter of the last received "Reverse Channel Data Indication". Suppose that the last sent MSN on the host is MSN 100 and the card last read message MSN 99 out of the FIFO. Perhaps at this point the card determines that it has the resources available to receive another 127 messages. The card will send another "Reverse Channel Grant Indication" containing MSN 226 ((last read MSN 99 + 127) modulus 256). The host is free to send out messages until it increments its last sent MSN to 226. [Consider that the card starts to over heat when the last sent MSN on the host is 159 and the last read message MSN on the card is 150. The card will send a "Reverse Channel Grant Indication" specifying MSN 150. The host will receive this indication and stop sending messages to the card.

The "Forward Channel Data Indication" message is used without a "grant" scheme and hence does not support flow control. In this case, the OTA data is sent from the card to the host PC with the assumption that the host will be able to handle all OTA data in the message payload portion of the message with no need for flow control.

### 4.2.1 Reverse Channel Grant Indication

This indication is sent from the modem to the host PC and is used to inform the host PC of the message sequence number of the last message it is prepared to accept from the host PC. The algorithm detailing the how the modem determines how many messages it is capable of receiving is beyond the scope of this document.

| |
|---|
| Message Id: 0x64 |
| Message Specific Parameter: Message Sequence Number |
| Message payload consists of a 1-byte return code: |
| • 0x00 - card is okay |
| • 0x02 - the card is overeating |

### 4.2.2 Reverse Channel Data Indication

Data that is sent from the modem "over the air" back into the network is termed "reverse channel data", This indication is sent from the host PC to the modem and is used to deliver data that is to be queued for transmission "over the air" by the modem.

| |
|---|
| Message Id: 0x23 |
| Message Specific Parameter: Message Sequence number |
| Message payload consists of the "over the air" data to be queued for transmission by the card. |

This indication is sent from the host PC to the card only when the host PC has been granted permission to send these indications to the card. Permission is granted to the host PC according to the message payload of the previously received Reverse Channel Grant Indication message. The last received message sequence number may be used by the card to determine up to which message sequence number send permission will be granted

### 4.2.3 Forward Channel Data Indication

Data that is sent from the network "over the air" to the modem is termed "forward channel data". This indication is sent from the modem to the host PC and is used to deliver "over the air" data that has been received by the modem.

| |
|---|
| Message Id., 0x63 |
| Message Specific Parameter: unused (in the future this field could be used to indicate data fragments) |
| Message payload carries the forward channel OTA data received by the modem. |

### 4.3 Control and Status Messages

Control and status data is sent between the card and the host PC to provide management of the modem device. This management consists of:
- Non-volatile configuration of the device
- Run-time configuration of the device
- Status reporting and monitoring of the device
- Transport of debug information to/from the device

### 4.3.1 System Shut Down Indication

The system shut down indication Save Non-volatile Data Indication is an unsolicited message sent by the host to instruct the card to save its non-volatile data.

| |
|---|
| Message Id: 0x26 |
| Message Specific Parameter: unused |
| There is no message payload associated with this message. |

For example, this could be sent when the watcher program terminates.

### 4.3.2 Configuration Information Request

The Configuration Information Request is sent from the host to the modem device to configure packet session information. Note that this information will vary for each wireless protocol. In order to accommodate the varying needs of each wireless protocol, the format of the configuration information portion of the message is flexible (on a per protocol basis). This message can be sent at anytime (once the modem application is up and running). Generally this message is sent whenever the user modifies any packet session settings/configurations. This data can be stored in non-volatile storage on the device (recommended) but it is not mandatory. Some example usages are:
• GPRS - This message will be sent when the host modifies any PDP Context Profile using Watcher or when an application submits an OID_WW_GPRS_DCONT OID.

| | | | | |
|---|---|---|---|---|
| Message Id: 0x08 | | | | |
| Message Specific Parameter: unused | | | | |
| Message payload consists of the following information structure: | | | | |
| | Protocol type | Specifies the format used for this message. Allows multiple wireless technologies to use same command ID for differing message formats 0 - GPRS 1 - UMTS 2- 255 Reserved for future wireless protocols | 1 byte | |
| | Query/Set flag | Indicates if request is a set or query operation. Profile information is optional in a query operation. The response always contain profile information regardless of query/set flag. 00 - Query of profile information. 01 - Set of profile information. | 1 byte | |
| | Profile ID | ID specifying which profile is being acted on (queried or set). Range dependent on protocol. GPRS - range is 0 - 2 | 1 byte | |
| | Length | Length of the following variable field (protocol specific configuration message). Can be set to 0 for query operation. | 2 bytes | |
| | Configuration buffer Protocol specific Configuration buffer. | Format varies depending on the protocol type field | Variable length | |
| | | | | |

### 4.3.2.1 GPRS configuration buffer

The following table describes the format of the configuration buffer for the GPRS protocol type.

| | | |
|---|---|---|
| Valid flag | 0 - This PDP context is valid 1 -This PDP Context is invalid or not yet configured | 1 byte |
| Automatic Context Activation flag | 0 - deferred context activation (context only activated when requested by user) 1 - immediate context activation ("always connected" configuration) - automatic context activation on packet transmission (Host driver automatically activates context with presence of IP data) Note: Not used by modem, provided only for bost storage convenience. | 1 byte |
| PDP type | 0 - IPv4 PDP type 1 -PPP PDP type | 1 byte |
| APN length | Length of APN below (0-100). 0 indicates no APN specified | 1 byte |
| APN | Example mo.cellco.co.uk | 100 ASCII characters |
| PDP address Length | length of PDP address below (0-16). 0 indicates dynamic addressing. Not used by modem, provided only for host storage convenience. | 1 byte |
| PDP address | IP or PDP address when using static PDP address configuration. Example (of an IPv4 address which are typically 4 bytes): 0x7F000201. Not used by modem. provided only for host storage convenience. | 16 bytes |
| Data Compression flag | 0 - no compression 1 compression | 1 byte |
| Header Compression flag | 0 - no compression 1 - compression | 1 byte |
| QoS precedence | Valid values 1 - 3 | 1 byte |
| QoS delay | Valid values 1 - 4 | 1 byte |
| QoS reliability | Valid values 1 - 5 | 1 byte |
| QoS peak | Valid values 1- 9 | 1 byte |
| Qos mean | Valid values 1 - 31 | 1 byte |
| Min precedence | Valid values 1 - 3 | 1 byte |
| Min delay | Valid values 1 - 4 | 1 byte |
| Min reliability | Valid values 1 - 5 | 1 byte |
| Min peak | Valid values 1 - 9 | 1 byte |
| Min mean | Valid values 1-31 | 1 byte |
| Primary DNS address length | Length of Primary DNS address. Valid range 0-16.0 indicates no DNS address present. Not used by modem, provided only for host storage convenience. | 1 byte |
| Primary DNS address | Primary DNS address. Example: 0x7F000201 is 127.0.2.1 Not used by modem, provided only for host storage convenience. | 16 bytes |
| Secondary DNS address length | Length of Secondary DNS address. Valid range 0- 16.0 indicates no DNS address present. Not used by modem, provided only for host storage convenience. | 1 byte |
| Secondary DNS address | Secondary DNS address. Example: 0x7F000201 is 127.0.21 Not used by modem, provided only for host storage convenience. | 16 bytes |
| PPP name | 32-character NULL terminated string. Not used by modem, provided only for host storage convenience, | 33 bytes |
| PPP password | 32-character NULL terminated string. Not used by modem, provided only for host storage convenience. | 33 bytes |

### 4.3.3 Configuration Information Response

This response is sent from the modem to the host in response to the Configuration Information Request.

### Message Id: 0x08

Message Specific Parameter: Response error code.
- 0x00 - Success, configuration valid
- 0x01 - Error, configuration invalid for protocol type specified

Message payload always contains the profile information of the ID specified regardless of set or query operation.

| | | |
|---|---|---|
| Protocol type | Specifies the format used for this message. Allows multiple wireless technologies to use same command ID for differing message formats 0 - GPRS 1 - UMTS 2- 255 Reserved for future wireless protocols | I byte |
| Query/Set flag | Indicates if request is a set or query Operation. Profile information is optional in a query operation. The response always contain profile information regardless of query/set flag. 00 - Query of profile information. 01- Set of profile information. | 1 byte |
| Profile ID | ID specifying which profile is being acted on (queried or set). Range dependent on protocol. GFRS - range is 0 - 2 | I byte |
| Length | Length of the following variable field (protocol specific configuration message) | 2 bytes |
| Configuration buffer Protocol specific configuration buffer. | Format varies depending on the protocol type field. See 4.3.2.1 | Variable length |

### 4.3.4 Packet Session Activation Request

The Packet Session Activation Request is a message sent by the host to initiate a packet session on the modem device (in GPRS this is a context activation). An example usage would be in the GPRS product when a host application submits the OID_WW_GPRS_CONTEXT_ACTIVATION OID. Note that a Packet Session Response message will always be sent in response to a Packet Session Request message.

| | | | | |
|---|---|---|---|---|
| Message Id: 0x09 | | | | |
| Message Specific Parameter: unused. | | | | |
| Message payload consists of the following information structure: | | | | |
| | Context ID or Packet session ID | This field is always present however it's use is optional (dependent on on the wireless protocol is use). GPRS - This field is defined as the Context ID. Identifies the context id being activated or deactivated (valid range of values can be derived using the PDP Context Summary Request M.I.P. message-but planned range is 0-2). The card will issue an error response message if the Context ID is out of range or invalid. | 1 byte | |
| | Action | 0x00 - Activate the packet session 0x01 - Deactivate the packet session | 1 byte | |

### 4.3.5 Packet Session Activation Response

This response is sent from the modem to the host in response to the Packet Session Activation Request.

| |
|---|
| Message Id: 0x49 |
| Message Specific Parameter: Error code. Possible values are: |
| 0 - success |
| 1 - failure |
| The message payload is optional If present it will consist of a "short" NULL terminated ASCII error string describing the error reason. Maximum payload length is 33 bytes (32 characters plus NULL terminator). This is only provided to aid in the process of debugging host software (terse strings are preferred). |

### 4.3.6 Link Status Indication.

The Link Status Indication is an unsolicited message sent by the modem to inform the host of a change in packet session status. This indication is to be used by the host driver (NDIS) to detect state changes in the packet session.
Message Id: 0x69
Message Specific Parameter: unused

Message payload consists of the following information structure:

| | | |
|---|---|---|
| Session ID (or Context ID) | Optional field always present but may not be used in all wireless protocol products.: Identifies the packet session (or GPRS context) which has changed state (valid range of values can be derived using the PDP Context Info Req. H.I.P. message - but usual range is 0-2. 255 is used when not related to any specific session, i.e. at start-up). | 1 byte |
| Coverage Code | 0x00 - No coverage | 1 byte |
| | 0x01 - Coverage, but no packet coverage available | |
| | 0x02 - Coverage, packet coverage available | |
| | 0x03 - Active packet session is established | |
| Session State | 0x01 -NDIS CSC Data (for 1x) | 1 byte |
| | 0x02 - NDIS Voice Call (for 1x) | |
| | 0x04 - MDIS Packet | |
| | 0x10 - UART CSC Data | |
| | 0x20 - UART Voice | |
| | 0x40 - UART Packet (for 1x) | |
| Reason string | Descriptive NULL terminated string indicating the reason for link status change. Max string length is 32 characters plus a terminating NULL. Shorter strings may be used but buffer length will always be fixed at 33 bytes. | 33 bytes |
| Active session link type (PDP context type) | 0 - IPv4 session type | 1 byte |
| | 1 - PPP session type | |
| | 2 - IPv6 session type | |
| | 255 - Unknown (no session established) | |
| Session (PDP) address length | Length of session address below (0 - 16 bytes). 0 indicates no address provided by network (PPP session type). | 1 byte |
| Session (PDP) address | IP address of the session | 16 |
| QOS precedence | Valid range 1 - 3 | 1 byte |
| QOS delay | Valid range 1 - 4 | 1 byte |
| QOS reliability | Valid range 1 - 5 | 1 byte |
| QOS peak | Valid range 1 - 9 | 1 byte |
| QOS mean | Valid range 1 - 31 | 1 byte |

### 4.3.7 Abort Indication

The Abort Indication is an unsolicited message sent by the card when it is aborting to inform the host of the reason for aborting.

| |
|---|
| Message Id: 0x6A |
| Message Specific Parameter: Unused |
| Message payload consists of error code followed by a null terminated error string. |

### 4.3.8 Modem Control and Status Indication

The Modem Control and Status Indication is an unsolicited message sent by the host to the modem for transport of control and status protocol packets.

| |
|---|
| Message Id:0x2B |
| Message Specific Parameter: Unused |
| The message payload is defined in reference R-6 (CWE Control and Status Protocol). |

### 4.3.9 Host Control and Status Indication

The Host Control and Status Indication is an unsolicited message sent by the modem to the host for transport of control and status protocol packets.

| |
|---|
| Message Id: 0x6B |
| Message Specific Parameter: Unused |
| The message payload is defined in reference R-6 (CWE Control and Status Protocol). |

### 4.3.10 Loop Back Request

The Loop Back Request is sent from the host to the card. The Message Payload of this request will be echo-ed back to the host in the Message Payload of the Loop Back Response. This message is used for testing firmware, host drivers and application software. The intent is not to use this message during normal operation.
Message Id: 0x03
Message Specific Parameter: unused

| | | |
|---|---|---|
| Loopback data | Data to be looped back in response | 0 to max payload |

The loopback request is stop and wait such that after the host has sent a loop back request to the card it should not send another loop back request until it has received a loop back response from the card.

The card will discard additional loop back requests if it is currently processing a loop back response.

### 4.3.11 Loop Back Response

The Loop Back Response is sent from the card to the host in response to a Loop Back Request. The contents of the Message Payload will be those of the received Message Payload of the Loop Back Request. This message is used for testing firmware, host drivers and application software. The intent is not to use this message during normal operation.
Message Id: 0x43
Message Specific Parameter: firmware image sending the response
   - 0x00 - response was sent from boot loader image.
   - 0x01 - response was sent from application image.

| | | |
|---|---|---|
| Loopback data | Data received from host request | 0 to max payload |

### 4.3.12 PDP Context Summary Request

The PDP Context Summary Request is sent by the host PC to the card to request a summary about the all of the PDP Contexts on the card. This message is also used to store the user's default context id (user profile). The expected response to this message is the PDP Context Summary Response message.
Message Id: 0x05
Message Specific Parameter: unused.

The message payload is defined as follows:

| | | |
|---|---|---|
| Update flag | The update flag indicates if the user wants to update tht default context id field. | 1 byte |
| | 0x00 - don't update | |
| | 0x01 - Update modern non-volatile ram with default context id. | |
| Default context ID field | User's default context ID. Valid range is 1 - 16. | 1 byte |

This message is stop and wait. Additional messages will be discarded by the modem until the response is sent.

**Usage note:** At start-up the host would sent this request with the "Update flag" set to 0x00 in order to read the context profile summary without changing the default context ID field.

After the user has changed the default context ID this request would be sent with the "Update flag" set to 0x01 in order to save the new default setting.

### 4.3.13 PDP Context Summary Response

The PDP Context Summary Response is sent from the card to the host in response to a PDP Context Summary Request.
Message Id: 0x45
Message Specific Parameter: Unused

Message payload consists of the following PDP Context information structure:

| | | |
|---|---|---|
| noOfDefCont | Number of defined PDP Contexts currently defined on the card | 1 byte. |
| maxNoOfCont | Maximum number of defined contexts that the card supports | 1 byte |
| Default context ID field | User's default context ID. Valid range is 1 - 16. | 1 byte |
| cid1value | The value for defined Context ID 1 | 1 byte |
| cid1state | Status of Context ID 1 | 1 byte |
| | 0x00 - Active | |
| | 0x01 - Inactive | |
| | 0x02 - Deleted | |
| | ··· | |
| cid16value | The value for defined Context ID 3 | 1 byte |
| cid16state | Status of Context ID 3 | 1 byte |
| | 0x00 - Active | |
| | 0x01 - Inactive | |
| | 0x02 - Deleted | |

### 4.3.14 Host Environment Indication

The Host Environment Indication will send information about the host to the card. This unsolicited message will be sent anytime after a Restart Indication from the card indicating the host's enviroment capabilties. No response is defined for this message.
Message Id: 0x2F
Message Specific Parameter: Unused

Message payload consists of the following PDP information structure:

| | | |
|---|---|---|
| Modem deep sleep support | This field is used to inform the modem of the host's capability of supporting deep sleep of the modern in which the clock signal is removed from the host interface logic. possible values are: | 1 byte |
| | 00 - Host does not support modem deep sleep (i.e. the interface logic must remain fully operational at all times). | |
| | 01- Host does support modern deep sleep (i.e. the clock to the host interface logic can be removed). The host will use the sleep logic signals specified in the CWE host interface document. | |
| Host MTU size | The maximum transmission unit size (in bytes) used by the host for IP data-grams. This information can be useful to the card for managing flow control of IP packets to the modem. | 2 bytes |

### Debugging Messages

### 4.3.15 Modem SWI Command Indication

The Modem SKI Command Indication is used to send an unsolicited string from the host to the modem where no response is expected. The purpose is to implement simple command line user interfaces that provide additional debugging information.

| |
|---|
| Message Id: 0x24 |
| Message Specific Parameter: unused |
| The message payload consists of a variable length null terminated response string. |

### 4.3.16 Host SWI Command Indication

The Host SWI Command Indication is used to send an unsolicited string from the modem to the host where no response is expected. The purpose is to implement simple command line user interfaces that provide additional debugging information.

| |
|---|
| Message Id: 0x65 |
| Message Specific Parameter: unused |
| The message payload consists of a variable length null terminated response string. |

### 4.3.17 Modem Protocol Stack Indication

The Modem Protocol Stack Indication is sent by the host PC to the card to communicate with the protocol stack diagnostic tool on the card. An example of this is the Qualcomm CAIT debug stream or the TTPcom genie stream.

| |
|---|
| Message Id: 0x2D |
| Message Specific Parameter: Depends on protocol stack used, can provide additional multiplexing such that multiple debug streams can be carried with this same command ID. |
| The message payload consists of a variable length binary data. |

### 4.3.18 Host Protocol Stack Indication

The Host Protocol Stack Indication is sent by the card to the host PC to communicate with the protocol stack diagnostic tool on the host. Examples of use are the CAIT and Genie debug streams.

| |
|---|
| Message Id: 0x6D |
| Message Specific Parameter: Depends on stack used. This can provide additional multiplexing such that multiple debug streams can be carried with this same command ID. |
| The message payload consists of a variable length binary data. |

### 4.3.19 Modem AT Command Indication

The Modem AT Command **Indication** is sent by the host PC to the card. This message comprises an AT command that should be processed by the card.

| |
|---|
| Message Id: 0x2C |
| Message Specific Parameter: unused |
| The message payload consists of a variable length null terminated string. |

### 4.3.20 Host AT Command Indication

The Host AT Command Indication is sent by the card to the host PC. This message comprises an AT command response or unsolicited AT command indication.

| |
|---|
| Message Id: 0x6C |
| Message Specific Parameter: unused |
| The message payload consists of a variable length null terminated string. |

### 4.3.21 Modem (Rosetta) Debug Log Indication

The Modem (Rosetta) Debug Log Indication is used to send an unsolicited string from the host to the modem where no response is expected.

| |
|---|
| Message Id: 0x2E |
| Message Specific Parameter: unused |
| The message payload consists of a variable length null terminated response string. |

Editor's note: It's unclear if this message is required.

### 4.3.22 Host (Rosetta) Debug Log Indication

The Host (Rosetta) Debug Log Indication is used to send an unsolicited string from the modem to the host where no response is expected.

| |
|---|
| Message Id: 0x6E |
| Message Specific Parameter: unused |
| The message payload consists of a variable length null terminated response string. |

Editor's note: It's unclear if this message is required.

### A. Editor's notes

- Need to define which messages are mandatory and which are optional.
- Add start-up sequencing document.
- Check that error strings are variable length
- Remove table around table concept (might be causing word to crash).
- Need to change wording of context ID to profile id.

## Claims

1. A system (20) comprising:
a host unit (22) including a processor (26); and
a wireless communication unit (24) including a transceiver (36), wherein communication between the host unit (22) and the wireless communication unit (24) use a host interface protocol (42), **characterized by** the host interface protocol (42) defining a message having a header (64) with a length field (64a) and message ID field (64c), the message ID field (64c) indicating whether the message includes data for transfer between the host unit (22) and the wireless communication unit (24) or whether the message includes control and status information, wherein the host interface protocol (42) allows multiplexing between data stream transfers and status transfers for information sent between the host unit (22) and wireless communication unit (24) and wherein a control and status protocol is used for control and status message transfers between the host (22) and the wireless communication unit (24), control and status messages being wrapped within host interface protocol messages.

2. The system of claim 1 wherein transmissions between the host unit (22) and the wireless communication unit (24) include a data-link protocol (40).

3. The system of claim 1 wherein the system (20) is further configured to use the message ID field of the host interface protocol (42) to distinguish between requests, responses, and indications.

4. The system of claim 1 wherein the wireless communication unit (24) is configured as a slave to the host unit (22).

5. The system of claim 1 wherein the host unit (22) is further configured to produce request messages to send to the wireless communication unit (24), and the wireless communication unit (24) is further configured to produce response messages in response to the requests.

6. The system of claim 1, the wireless communication unit (24) is further configured to store a first one or more E-mail messages from the host unit (22), each of the first one or more messages having a message identifier (64c).

7. The system of claim 1 wherein the wireless communication unit (24) is a modem unit (24).

8. A method for operating a wireless communication unit (24), the method comprising:
receiving a control message from a host unit (22), **characterized by**: the control message conforming to a host interface protocol (42) by having a message header (64) with a length field and a message ID filed (64a), the message ID field (64a) indicating whether the message includes data for transfer between the host unit (22) and the wireless communication unit (24) or whether the message includes control and status information;
multiplexing the control message among one or more data stream transfers, the data transfers conforming to the host interface protocol (42) by having a message header (64) with a length field (64a) and a message ID field (64c), the multiplexing accomplished using the message ID fields (64c) of the control message and the status transfers, wherein a control and status protocol is used for control and status message transfers between the host unit (22) and the wireless communication unit (24), control and status messages being wrapped within host interface protocol (42) messages.

9. The method of claim 8, further comprising:
sending a response control message to the host unit (22), the response control message corresponding to the control message but having a different value in the message ID field (64c).

10. The method of claim 8, wherein the control message is a request message and the message ID field (64c) identifies it as a request message.

11. The method of claim 10, wherein a request message asks the wireless communication unit (24) to perform an operation or return a value.

12. The method of claim 11, wherein a response control message corresponding to the request message must be received by the host unit (22) before the host unit (22) generates another request message of the same type.

13. The method of claim 8, wherein the control message is an indication message and the message ID field (64c) identifies it as an indication message.

14. The method of claim 13, wherein a control message sends unsolicited data without the need for a response.

## Patentansprüche

1. System (20) umfassend:
eine Hosteinheit (22) die einen Prozessor (26) enthält; und
eine Drahtloskommunikationseinheit (24), die einen Transceiver (36) enthält, wobei Kommunikation zwischen der Hosteinheit (22) und der Drahtloskommunikationseinheit (24) ein Hostschnittstellenprotokoll (42) verwendet, **dadurch gekennzeichnet, dass** das Hostschnittstellenprotokoll (42) eine Nachricht definiert, die einen Kopf (64) mit einem Längenfeld (64a) und einem Nachrichten-ID-Feld (64c) hat, wobei das Nachrichten-ID-Feld (64c) anzeigt, ob die Nachricht Daten zur Übertragung zwischen der Hosteinheit (22) und der Drahtloskommunikationseinheit (24) enthält, oder ob die Nachricht Steuer- und Statusinformation enthält, wobei das Hostschnittstellenprotokoll (42) Multiplexing zwischen Datenstromübertragungen und Statusübertragungen für Information, die zwischen der Hosteinheit (22) und der Drahtloskommunikationseinheit (24) gesendet wird, erlaubt, und wobei ein Steuer- und Statusprotokoll für Steuer- und Statusnachrichtenübertragungen zwischen der Hosteinheit (22) und der Drahtloskommunikationseinheit (24) verwendet wird, wobei Steuer- und Statusnachrichten in Hostschnittstellenprotokollnachrichten gepackt sind.

2. System nach Anspruch 1, wobei Übertragungen zwischen der Hosteinheit (22) und der Drahtloskommunikationseinheit (24) ein Daten-Link-Protokoll (40) enthalten.

3. System nach Anspruch 1, wobei das System (20) ferner dazu konfiguriert ist, das Nachrichten-ID-Feld des Hostschnittstellenprotokolls (42) zu verwenden, um zwischen Anfragen, Antworten und Anzeigen zu unterscheiden.

4. System nach Anspruch 1, wobei die Drahtloskommunikationseinheit (24) als ein Slave zu der Hosteinheit (22) konfiguriert ist.

5. System nach Anspruch 1, wobei die Hosteinheit (22) ferner dazu konfiguriert ist, Anfragenachrichten, die an die Drahtloskommunikationseinheit (24) gesendet werden, zu erzeugen, und die Drahtloskommunikationseinheit (24) ferner dazu konfiguriert ist, Antwortnachrichten in Antwort auf die Anfragen zu erzeugen.

6. System nach Anspruch 1, wobei die Drahtloskommunikationseinheit (24) ferner dazu konfiguriert ist, erste ein oder mehrere Email-Nachrichten von der Hosteinheit (22) zu speichern, wobei jede der ersten ein oder mehreren Nachrichten einen Nachrichtenidentifikator (64c) hat.

7. System nach Anspruch 1, wobei die Drahtloskommunikationseinheit (24) eine Modemeinheit (24) ist.

8. Verfahren zum Betreiben einer Drahtloskommunikationseinheit (24), wobei das Verfahren umfasst:
Empfangen einer Steuernachricht von einer Hosteinheit (22), **gekennzeichnet dadurch, dass** die Steuernachricht mit einem Hostschnittstellenprotokoll (42) dadurch konform ist, dass sie einen Nachrichtenkopf (64) mit einem Längenfeld und einem Nachrichten-ID-Feld (64a) hat, wobei das Nachrichten-ID-Feld (64a) anzeigt, ob die Nachricht Daten zur Übertragung zwischen der Hosteinheit (22) und der Drahtloskommunikationseinheit (24) enthält, oder ob die Nachricht Steuer- und Statusinformation enthält;
Multiplexing der Steuernachricht unter einem oder mehreren Datenstromübertragungen, wobei die Datenübertragungen mit dem Hostschnittstellenprotokoll (42) dadurch konform sind, dass sie einen Nachrichtenkopf (64) mit einem Längenfeld (64a) und einem Nachrichten-ID-Feld (64c) haben, wobei das Multiplexing unter Verwendung des Nachrichten-ID-Felds (64c) der Steuernachricht und den Statusübertragungen erreicht wird, wobei ein Steuer- und Statusprotokoll für Steuer- und Statusnachrichtenübertragungen zwischen der Hosteinheit (22) und der Drahtloskommunikationseinheit (24) verwendet wird, wobei Steuer- und Statusnachrichten in Hostschnittstellenprotokollnachrichten (42) gepackt sind.

9. Verfahren nach Anspruch 8, ferner umfassend:
Senden einer Antwortsteuernachricht an die Hosteinheit (22), wobei die Antwortsteuernachricht der Steuernachricht entspricht aber einen unterschiedlichen Wert in dem Nachrichten-ID-Feld (64c) hat.

10. Verfahren nach Anspruch 8, wobei die Steuernachricht eine Anfragenachricht ist und das Nachrichten-ID-Feld (64c) sie als eine Anfragenachricht identifiziert.

11. Verfahren nach Anspruch 10, wobei eine Anfragenachricht die Drahtloskommunikationseinheit (24) fragt, eine Operation auszuführen oder einen Wert zurückzugeben.

12. Verfahren nach Anspruch 11, wobei eine Anfragesteuernachricht entsprechend der Anfragenachricht von der Hosteinheit (22) empfangen werden muss bevor die Hosteinheit (22) eine andere Anfragenachricht des gleichen Typs generiert.

13. Verfahren nach Anspruch 8, wobei die Steuernachricht eine Anzeigenachricht ist und das Nachrichten-ID-Feld (64c) sie als eine Anzeigenachricht identifiziert.

14. Verfahren nach Anspruch 13, wobei eine Steuernachricht ohne den Bedarf einer Antwort unaufgeforderte Daten sendet.

## Revendications

1. Système (20) comprenant :
une unité hôte (22) incluant un processeur (26) ; et
une unité de communication sans fil (24) incluant un émetteur-récepteur (36), dans lequel la communication entre l'unité hôte (22) et l'unité de communication sans fil (24) utilise un protocole d'interface hôte (42), **caractérisé par** le protocole d'interface hôte (42) définissant un message présentant un en-tête (64) avec un champ de longueur (64a) et un champ d'ID de message (64c), le champ d'ID de message (64c) indiquant si le message comporte des données pour le transfert entre l'unité hôte (22) et l'unité de communication sans fil (24) ou si le message comporte des informations de contrôle et de statut, dans lequel le protocole d'interface hôte (42) permet le multiplexage entre des transferts de flux de données et des transferts de statut pour des informations envoyées entre l'unité hôte (22) et l'unité de communication sans fil (24) et dans lequel un protocole de contrôle et de statut est utilisé pour les transferts de message de contrôle et de statut entre l'unité hôte (22) et l'unité de communication sans fil (24), des messages de contrôle et statut étant emballés dans des messages de protocole d'interface hôte.

2. Système selon la revendication 1, dans lequel des transmissions entre l'unité hôte (22) et l'unité de communication sans fil (24) incluent un protocole de liaison de données (40).

3. Système selon la revendication 1, dans lequel le système (20) est en outre configuré pour utiliser le champ d'ID de message du protocole d'interface hôte (42) pour la distinction entre des requêtes, réponses et indications.

4. Système selon la revendication 1, dans lequel l'unité de communication sans fil (24) est configurée comme un esclave pour l'unité hôte (22).

5. Système selon la revendication 1, dans lequel l'unité hôte (22) est en outre configurée pour produire des messages de requête à envoyer à l'unité de communication sans fil (24), et l'unité de communication sans fil (24) est en outre configurée pour produire des messages de réponse en réponse aux requêtes.

6. Système selon la revendication 1, l'unité de communication sans fil (24) est en outre configurée pour enregistrer un premier ou plusieurs messages électroniques de l'unité hôte (22), chacun du premier ou plusieurs messages présentant un identifiant de message (64c).

7. Système selon la revendication 1, dans lequel l'unité de communication sans fil (24) est une unité de modem (24).

8. Procédé d'exploitation d'une unité de communication sans fil (24), le procédé comprenant :
la réception d'un message de contrôle par une unité hôte (22), **caractérisé par** :
le message de contrôle se conformant à un protocole d'interface hôte (42) en présentant un en-tête de message (64) avec un champ de longueur et un champ d'ID de message (64a), le champ d'ID de message (64a) indiquant si le message comporte des données pour le transfert entre l'unité hôte (22) et l'unité de communication sans fil (24) ou si le message comporte des informations de contrôle et de statut ;
multiplexage du message de contrôle parmi un ou plusieurs transferts de flux de données, les transferts de données se conformant au protocole d'interface hôte (42) par présentation d'un en-tête de message (64) avec un champ de longueur (64a) et un champ d'ID de message (64c), le multiplexage étant accompli en utilisant les champs d'ID de message (64c) du message de contrôle et les transferts de statut, dans lequel un protocole de contrôle et de statut est utilisé pour des transferts de message de contrôle et de statut entre l'unité hôte (22) et l'unité de communication sans fil (24), des messages de contrôle et de statut étant emballés dans des messages de protocole d'interface hôte (42).

9. Procédé selon la revendication 8, comprenant en outre :
l'envoi d'un message de contrôle de réponse à l'unité hôte (22), le message de contrôle de réponse correspondant au message de contrôle mais présentant une valeur différente dans le champ d'ID de message (64c).

10. Procédé selon la revendication 8, dans lequel le message de contrôle est un message de requête et le champ d'ID de message (64c) l'identifie comme un message de requête.

11. Procédé selon la revendication 10, dans lequel un message de requête demande à l'unité de communication sans fil (24) de réaliser une opération ou un retour d'une valeur.

12. Procédé selon la revendication 11, dans lequel un message de contrôle de réponse correspondant au message de requête doit être reçu par l'unité hôte (22) avant que l'unité hôte (22) ne génère un autre message de requête du même type.

13. Procédé selon la revendication 8, dans lequel le message de contrôle est un message d'indication et le champ d'ID de message (64c) l'identifie comme un message d'identification.

14. Procédé selon la revendication 13, dans lequel un message de contrôle envoie des données non sollicitées sans nécessiter de réponse.
